# EUROPEAN PATENT SPECIFICATION

(11) **EP 4 113 962 B1**
(45) Date of publication and mention of the grant of the patent: **15.04.2026**
(21) Application number: 22179683.2
(22) Date of filing: 17.06.2022
(51) Int. Cl.: H04N 1/00, H04N 1/32, G03G 15/00, G06F 3/12

(54) **PRINTING SYSTEM, CARRIER MEANS, AND IMAGE FORMING APPARATUS**
DRUCKSYSTEM, TRÄGERMITTEL UND BILDERZEUGUNGSGERÄT
SYSTÈME D'IMPRESSION, MOYENS DE SUPPORT ET APPAREIL DE FORMATION D'IMAGES

(30) Priority: 30.06.2021 JP 2021109038; 01.06.2022 JP 2022089468
(43) Date of publication of application: 04.01.2023
(73) Proprietor: Ricoh Company, Ltd., Tokyo 143-8555 (JP)
(72) Inventor: Miyata, Akira, Tokyo, 143-8555 (JP)
(74) Representative: Marks & Clerk LLP

(56) References cited:
- EP-A1- 3 702 844
- EP-A1- 3 726 826
- US-A1- 2021 132 875

## Description

### BACKGROUND

### Technical Field

The present disclosure relates to a printing system and carrier means.

### Related Art

Various characteristics are desired in toners used for image formation by laser printers and the like from the viewpoints of development, transfer, and fixing of the toner and image quality. For example, Japanese Unexamined Patent Application Publication No. 2006-038933 discloses forming an image with a toner that reflects or absorbs light of a specific wavelength. Japanese Unexamined Patent Application Publication No. 2006-038933 discloses mixing an infrared absorber in a standard color toner of cyan (C), magenta (M), yellow (Y), and black (K) for image formation.

In the related art, a design of an image to be printed is restricted. The term "design" refers to arrangement and color scheme of text, figures, images, etc. In other words, an information processing apparatus embeds an image such as a barcode to be printed in a specific color in a page of an image to be printed, and an image forming apparatus outlines the barcode at the time of printing. The outlined portion is made blank. If the image forming apparatus does not outline the image such as a barcode, the image remains. Thus, in the related art, there is a restriction that an image to be printed cannot be designed using the entire page of the image to be printed.

In view of such an issue, an object of the present invention is to print a specific color while reducing restrictions on a design of an image to be printed.

EP-A-3702844 discloses an information processing apparatus including a color specification unit configured to display a setting screen for a background pattern that allows a user to designate a special consumable material as a color to be used for information specified as the background pattern; a print data generation unit configured to generate print data using the designated special consumable material; and a print data transmission unit configured to transmit the print data to an image forming apparatus.

### SUMMARY

The invention is set out in the appended set of claims. According to one aspect of the present invention, restrictions on a design of an image to be printed are reduced.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1A and FIG. 1B are diagrams illustrating printing using a spot color, according to the comparative art;
FIG. 2A and FIG. 2B illustrate examples of a print image, an infrared (IR) toner image, and a printed result, according to an embodiment of the present invention;
FIG. 3 is a flowchart illustrating an overview of an operation performed by a printing system, according to an embodiment of the present invention;
FIG. 4 is a schematic diagram illustrating a configuration of the printing system, according to an embodiment of the present invention;
FIG. 5 is a block diagram illustrating an example of a hardware configuration of each of an information processing apparatus and an IR image management server, according to an embodiment of the present invention;
FIG. 6 is a block diagram illustrating an example of a hardware configuration of an image forming apparatus , according to an embodiment of the present invention;
FIG. 7 is a block diagram illustrating an example of functional configurations of the information processing apparatus and the IR image management server, according to an embodiment of the present invention;
FIG. 8 is a diagram illustrating image management tables that an IR toner image management application includes, according to an embodiment of the present invention;
FIG. 9A, FIG. 9B, and FIG. 9C are diagrams illustrating examples of a configuration of an IR image management table, according to an embodiment of the present invention;
FIG. 10 is a block diagram illustrating a functional configuration of the image forming apparatus, according to an embodiment of the present invention;
FIG. 11 is a flowchart illustrating an example of processes or operation performed by a printer driver, according to an embodiment of the present invention;
FIG. 12 is a diagram illustrating an example of a print setting screen, according to an embodiment of the present invention;
FIG. 13 is a flowchart illustrating an example of processes or operation performed by the IR toner image management application of receiving user settings for generating the IR image management table, according to an embodiment of the present invention;
FIG. 14 is a flowchart illustrating an example of processes or operation performed by the IR toner image management application when the printer driver invokes the IR toner image management application, according to an embodiment of the present invention;
FIG. 15 is a flowchart illustrating an example of processes or operation performed by the IR image management server of transmitting a uniform resource locator (URL) to the IR toner image management application in response to receiving an IR toner image and a print position, according to an embodiment of the present invention;
FIG. 16 is a flowchart illustrating an example of processes or operation performed by the image forming apparatus of performing printing according to print data, according to an embodiment of the present invention;
FIG. 17 is a diagram for describing an operation of printing with the IR toner performed by the image forming apparatus, according to an embodiment of the present invention; and
FIG. 18A, FIG. 18B, and FIG. 18C are diagrams illustrating an example of overprint, according to an embodiment of the present invention.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

Referring to drawings, a printing system and a printing method performed by the printing system according to example embodiments of the present disclosure are described.

### Description of the Comparative Art:

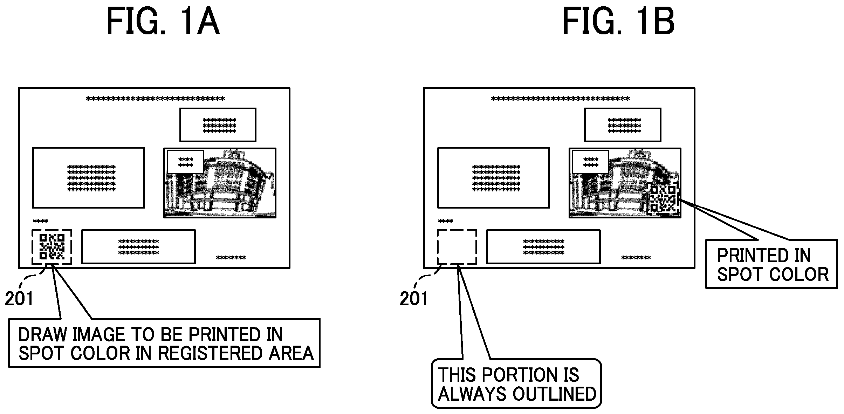

FIG. 1A and 1B are diagrams illustrating printing using a spot color according to the comparative art. FIGS. 1A and 1B are diagrams illustrating a comparative method for printing with a spot color (special color or particular color) toner, using general-purpose application software that handles red, green, and blue (RGB) image data (application software that does not create a spot color layer). In this example, as illustrated in FIG. 1A, a user embeds, in a portion 201 of an image to be printed, an embedded image to be printed with a spot color toner. The embedded image is, for example, a barcode to be printed with an infrared (IR) toner (hereinafter referred to as the IR toner image).

An image forming apparatus 30 cuts out the IR toner image from the portion 201, whose position is designated, of the print image and superimposes the IR toner image on a different designated position (a photograph area in FIG. 1B). Accordingly, the portion 201 of the print image as the result remains white. Although the image forming apparatus 30 can keep the IR toner image in the portion 201 of the print image, it is not preferable that the barcode or the like remains. As describe, an area for the IR toner image is required in the print image. This causes an inconvenience that not the entire page is usable for a user to design the print image.

### Overview of Operation of Printing System:

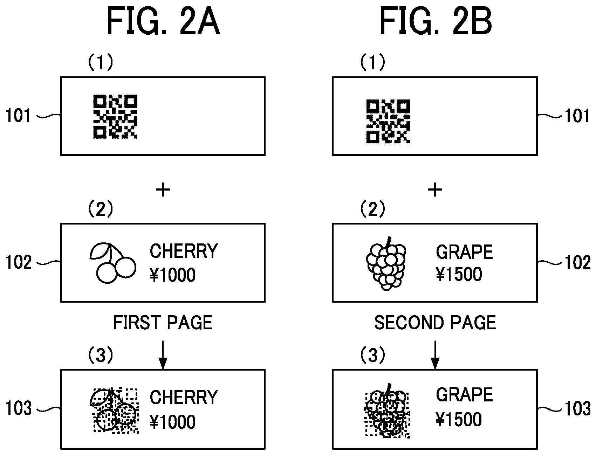

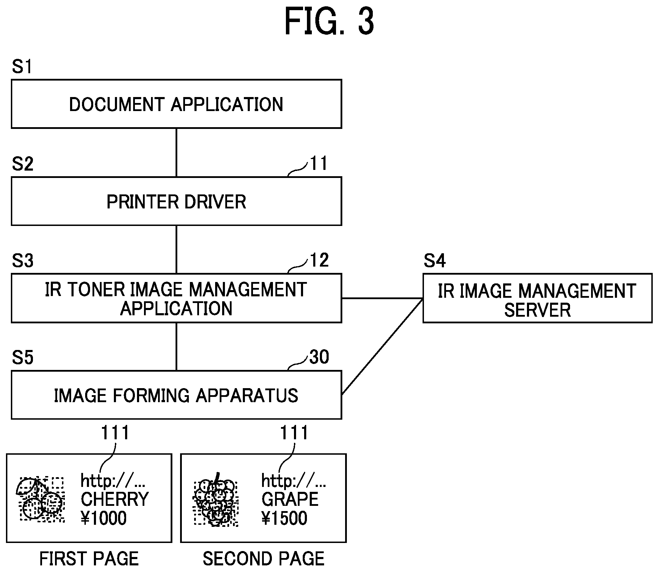

Referring to FIG. 2A, FIG. 2B, and FIG. 3, an overview of how the image forming apparatus 30 forms an image with a spot color is described, according to the present embodiment. FIG. 2A and FIG. 2B illustrate examples of the print image, the IR toner image, and a printed result. Although FIG. 2A and FIG. 2B are different in that FIG. 2A indicates a first page in the print image and FIG. 2B indicates a second image in the print image, the processing flow is the same except that the print result differs depending on the page difference. FIG. 3 is a flowchart illustrating an overview of an operation performed by a printing system 100 according to the present embodiment. The operation of FIG. 3 is performed mainly by an information processing apparatus 10 and the image forming apparatus 30.
(1) The information processing apparatus 10 includes application software that handles a plurality of IR toner images (e.g., barcodes in FIG. 2A and FIG. 2B). The application software receives, from a user, designation of an IR toner image 101 for each page at the time of printing. In the following, this application software is referred to as an "IR toner image management application 12". The IR toner image management application 12 also stores an association between each page of the print image and the IR toner image.
(2) The user operates general-purpose application software to prepare a print image 102 to be printed. Each of a picture of cherries accompanied by a price in FIG. 2A and a picture of grapes accompanied by a price in FIG. 2B is the print image 102.
(3) In response to an instruction for printing from the user, the image forming apparatus 30 prints the print image 102 on which the IR toner image 101 is superimposed. A printed matter 103 is output in which the IR toner image 101 is superimposed on the print image 102, the IR toner image being transparent to the naked eye.

The operation is described below with reference to FIG. 3.

In step S1, a user operates a general-purpose application software to prepare a print image to be printed.

In step S2, in response to designation by the user of printing with the IR toner, a printer driver 11 invokes (activates) the IR toner image management application 12. The printer driver 11 transfers print data of the print image to the IR toner image management application 12.

In step S3, the user operates the IR toner image management application 12 to designate, for each page in the print image, the IR toner image and a print position at which the IR toner image is to be printed. The print position is an example of position information.

In step S4, the IR toner image management application 12 transmits the IR toner image and information on the print position to an IR image management server 50. After storing the received IR toner image and print position, the IR image management server 50 generates a uniform resource locator (URL) indicating a storage location and transmits the URL to the IR toner image management application 12. The IR toner image management application 12 draws the URL received from the IR image management server 50 at a predetermined position of the print image. The IR toner image management application 12 sets a printing command indicating that the URL is a storage location of the IR toner image and the IR toner image is to be printed in a specific color. The IR toner image management application 12 performs the same processes for all pages and transmits the print image to the image forming apparatus 30.

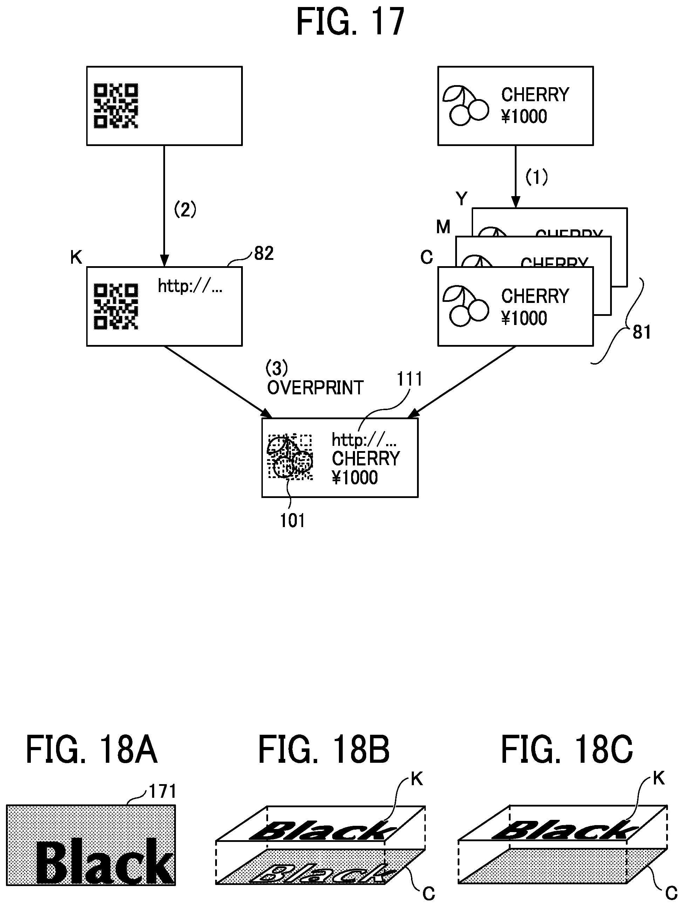

In step S5, the image forming apparatus 30 acquires a URL 111 from a predetermined position of each page. In a case that the printing command includes a setting indicating that the URL 111 relates to IR toner printing, the image forming apparatus 30 acquires the IR toner image and the print position from the storage location indicated by the URL 111. The image forming apparatus 30 overprints the IR toner image with the IR toner at the print position of the print image. Details of the overprinting is described below with reference to FIG. 18A to FIG. 18C. Thus, the image forming apparatus 30 prints the print image on which the IR toner image is superimposed.

In this way, the printer driver 11 receives the designation of the IR toner printing and transfers the print data to the IR toner image management application 12. The IR toner image management application 12 associates the IR toner image designated by the user with the print image. After processing all pages, the IR toner image management application 12 returns the print data to the printer driver 11, and the printer driver 11 transfers the processed print data to the image forming apparatus 30. The image forming apparatus 30 analyzes the print data for each page. Based on the analysis result indicating that the printing command for printing with the IR toner is added, the image forming apparatus 30 overprints the IR toner image on the print image with the IR toner.

With this configuration, the printing system 100 can perform printing using the IR toner with a general-purpose application that handles RGB image data. Further, the printing system 100 allows the user to use the entire page to design a print image.

### Terms:

The term "specific color" (spot color or special color) refers to a color other than cyan, magenta, yellow, and black (these are called process colors). For example, the specific color is gold, silver, white, or transparent. Since some image forming apparatus 30 (particularly inkjet type) can use inks of different colors in addition to cyan, magenta, yellow, and black, the spot color may be different depending on the image forming apparatus 30. Further, the specific color (spot color) can be a color that is not expressed with RGB by the application software. A coloring material such as toner or ink capable of printing a spot color is called a spot color material (or special color material). In the present embodiment, the color of the IR toner is the spot color.

Further, the term "transparent" refers to being invisible to light of a certain wavelength. Being "transparent" is not necessarily completely invisible. Being "transparent" satisfies at least one of seemingly invisible and not capturable by an imaging device. The transparent toner or ink may be called stealth toner or stealth ink.

In the present embodiment, for example, the image forming apparatus 30 in which a spot color is assigned to black is used, instead of an image forming apparatus capable of designating and printing a spot color other than cyan, magenta, yellow, and black. In other words, the colors handled by the image forming apparatus 30 can be only cyan, magenta, yellow, and black. The image forming apparatus 30 according to the present embodiment does not use black toner, and the black toner cartridge contains a spot color material. However, an image forming apparatus (that handles cyan, magenta, yellow, black, and spot color) capable of designating and printing a spot color can also be used as the image forming apparatus 30.

A specific color image is an image printed in a spot color. In the present embodiment, a description is given of an example in which the specific color image is an IR toner image.

### Example of System Configuration:

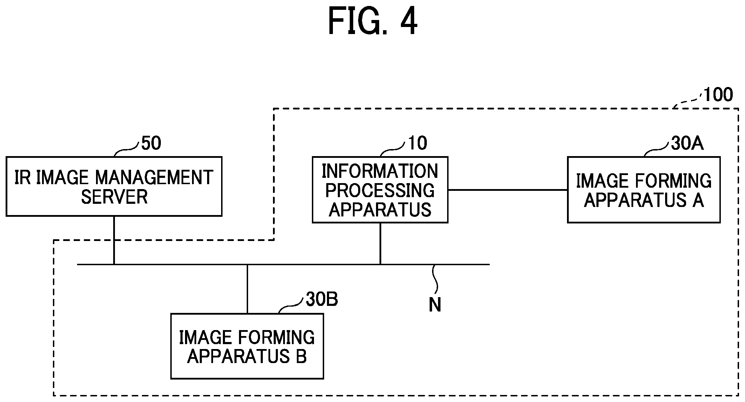

FIG. 4 is a schematic diagram illustrating a configuration of the printing system 100. The printing system 100 illustrated in FIG. 4 includes the information processing apparatus 10 and one or more image forming apparatuses 30. The information processing apparatus 10 and the image forming apparatuses 30 are communicably connected to the IR image management server 50. The image forming apparatus 30 connected to the information processing apparatus 10 through a dedicated network is referred to as an "image forming apparatus 30A". The image forming apparatus 30 connected via a network N is referred to as an "image forming apparatus 30B". Any one of the image forming apparatus 30A and the image forming apparatus 30B is referred to as the "image forming apparatus 30".

The information processing apparatus 10 and the image forming apparatus 30A are connected peer to peer (one-to-one) by the dedicated network such as a universal serial bus (USB) cable. However, the connection therebetween is not necessarily constantly maintained, and a user can attach and detach the dedicated network. In addition to the USB cable, examples of the dedicated line include, a personal computer (PC) card, a peripheral component interconnect (PCI) bus, an Institute of Electrical and Electronics Engineers (IEEE) 1394 bus, and a small computer system interface (SCSI).

In another example, the information processing apparatus 10 and the image forming apparatus 30A are wirelessly connected to each other so as to communicate with each other. Examples of peer to peer wireless communication include Bluetooth^{®} and wireless local area network (LAN).

The information processing apparatus 10 is communicably connected to the image forming apparatus 30B via the network N. The network N is assumed to be a general-purpose network such as a LAN or the Internet. The LAN is, for example, a LAN in a facility such as an office where the image forming apparatus 30B is installed. In another example, the network N further includes a virtual private network (VPN) and a wide area Ethernet^{®}. The network N is configured as one or both of a wired network and a wireless network.

The information processing apparatus 10 executes various control programs, such as an operating system (OS) and the printer driver 11, and application software, to provide functions corresponding to the application software. The information processing apparatus 10 is often called a computer. The control program is, for example, a program that is so-called a device driver (software prepared to enable the OS to control hardware and the like connected to a personal computer). An example of the device driver is the printer driver 11. Specific examples of the information processing apparatus 10 include a PC, a smartphone, a tablet terminal, a personal digital assistant (PDA), and a wearable PC.

Other examples of the information processing apparatus 10 include an electronic whiteboard capable of mutual communication, an output device such as digital signage, a projector, and a videoconference terminal. In other words, any suitable apparatus is used as the information processing apparatus 10, provided that the OS, control program, and application software operate on the apparatus.

The image forming apparatus 30 forms an image such as characters (text) or figures mainly with toner or ink on a recording medium. The image forming apparatus 30 according to the present embodiment is capable of printing cyan, magenta, and yellow image data with a toner or ink that is visible to the naked eye and is further capable of printing black image data with a spot color material (toner or ink). The toner or ink that is visible to the naked eye is hereinafter referred to as "visible material" The image forming apparatus 30 is capable of forming an image on one recording medium using both the visible material and the spot color material. Alternatively, the image forming apparatus 30 is also capable of forming an image using only one of the visible material and the spot color material.

Usable as the spot color material is a toner or ink that has absorbency in the wavelength range (around 850 nm) of infrared light including near-infrared light and has less absorbency in the wavelength range of visible light (about 400 to 700 nm). In other words, in the spot color material, the absorbency in the visible wavelength range is smaller than the absorbency in the infrared wavelength range. Such a spot color material is transparent (invisible) to visible light and legible when irradiated with infrared light. In other words, the spot color means transparent to visible light. When irradiated with infrared light, the spot color material absorbs infrared light and looks black. The colors cyan, magenta, and yellow are transparent to infrared light. On the other hand, there are two kinds of black materials (ordinary black toner). One kind of black material absorbs infrared light and the other kind of black material does not absorb infrared light. When a black image that absorbs infrared light is formed together with an image of the spot color material, both images look black, making it difficult to recognize a barcode or the like formed with the spot color material. In this case, it is not desirable to form the black image that absorbs infrared light and the spot color image on the same sheet. On the other hand, when a black image that does not absorb infrared light is formed together with the spot color image, only the spot color image looks black when irradiated with infrared light. Accordingly, a barcode or the like formed with the spot color material is recognizable. In the present embodiment, a description is given of the image forming apparatus 30 that performs printing without using black color. For this reason, black is expressed by superimposing cyan, magenta, and yellow. In another example, printing is performed using five colors of cyan, magenta, yellow, black that does not absorb infrared light, and spot color.

Since the spot color material can be used to print information used for determining the authenticity of an output product, the spot color material has the effect of inhibiting duplication of the output product. Since the security is improved, the spot color material can be said to be a consumer material for security.

In another example, the spot color material is toner or ink having absorbency relative to ultraviolet light (UV) and a small absorbency relative to visible light. In still another example, an image is formed with material that is transparent in a normal state and is chemically changed and rendered visible by application of heat, laser, or chemicals, etc. In still another example, information that is difficult to be recognized with the naked is formed by an uneven surface.

Any suitable material to which toner or ink can adhere is used as the recording medium on which the image forming apparatus 30 performs printing. Specifically, the recording medium is a medium on which the toner or ink can temporarily adhere and then solidify or permeate. Specific examples of the recording medium include recording media such as paper, recording paper, film, and cloth; electronic components such as electronic boards and piezoelectric elements; and powder layers (particle layers), and any material to which the toner or ink adheres is included unless otherwise specified.

The above-mentioned "material to which toner or ink can adhere" includes any material, such as paper, thread, fiber, cloth, leather, metal, plastic, glass, wood, ceramics, or the like, provided that toner or ink can temporarily adhere.

The image forming apparatus 30 includes an electrophotographic printer, an inkjet printer that discharges liquid (droplets), and a printer that thermally transferring an ink ribbon. In another example, the image forming apparatus 30 is a multifunction peripheral. The "multifunction" of the multifunction peripheral means having a plurality of functions of, for example, image forming, facsimile transmission and reception, scanning of a document, and copying. The multifunction peripheral is sometimes called an MFP. In the present embodiment, the image forming apparatus 30 having the image forming function will suffice. The image forming apparatus 30 may also be called a printer.

The IR image management server 50 is an information processing system having one or more computers. Any suitable computer is used as the IR image management server 50, provided that the computer creates a storage location of the IR toner image and the print position. For this reason, the IR image management server 50 does not have to be called as a server. In one example, the IR image management server 50 resides on the Internet. In another example, the IR image management server 50 resides in an on-premises environment. In one example, the IR image management server 50 supports cloud computing. The "cloud" is a term used when specific hardware resources are not intended.

### Hardware Configuration:

Descriptions are given below of the hardware configurations of the information processing apparatus 10, the image forming apparatus 30, and the IR image management server 50 of the printing system 100.

### Information Processing Apparatus and IR Image Management Server:

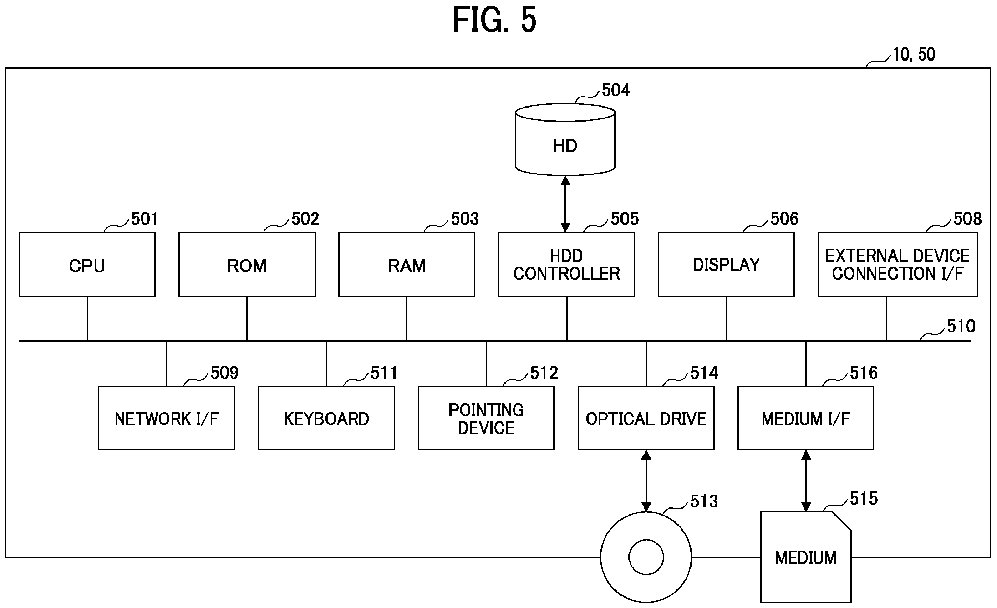

FIG. 5 is a block diagram illustrating an example of a hardware configuration of each of the information processing apparatus 10 and the IR image management server 50, according to the present embodiment. As illustrated in FIG. 5, each of the information processing apparatus 10 and the IR image management server 50 is implemented by a computer. As illustrated in FIG. 5, the computer includes a central processing unit (CPU) 501, a read only memory (ROM) 502, a random access memory (RAM) 503, a hard disk (HD) 504, a hard disk drive (HDD) controller 505, a display 506, an external device connection interface (I/F) 508, a network I/F 509, a data bus 510, a keyboard 511, a pointing device 512, an optical drive 514, and a medium I/F 516.

The CPU 501 controls the entire operations of the information processing apparatus 10 and the IR image management server 50. The ROM 502 stores programs such as an initial program loader (IPL) to boot the CPU 501. The RAM 503 is used as a work area for the CPU 501. The HD 504 stores various data such as programs. The HDD controller 505 controls reading or writing of various data with respect to the HD 504 under control of the CPU 501. The display 506 displays various information such as cursors, menus, windows, characters, or images. The external device connection I/F 508 is an interface that connects the information processing apparatus 10 and the IR image management server 50 to various external devices. Examples of the external devices include a USB memory and a printer. The network I/F 509 is an interface for performing data communication using the network N. The data bus 510 is, for example, an address bus or a data bus, which electrically couples the components illustrated in FIG. 5, such as the CPU 501.

The keyboard 511 is one example of an input device provided with a plurality of keys for allowing a user to input characters, numerals, or various instructions. The pointing device 512 is an example of an input device that allows a user to select or execute various instructions, select an item to be processed, or move the cursor being displayed. The optical drive 514 controls reading or writing of various data with respect to an optical storage medium 513, which is an example of a removable storage medium. The optical drive 514 is, for example, a compact disc (CD) drive, a digital versatile disk (DVD) drive, or a Blu-Ray^{®} drive. The medium I/F 516 controls reading or writing (storing) of data with respect to a storage medium 515 such as a flash memory.

### Image Forming Apparatus:

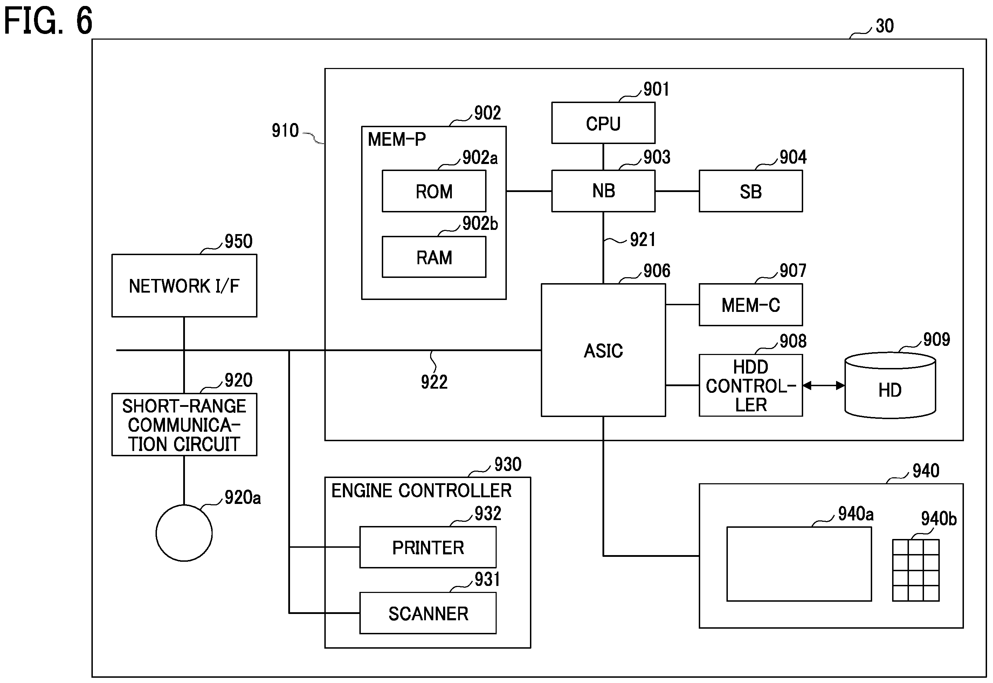

FIG. 6 is a block diagram illustrating an example of a hardware configuration of the image forming apparatus 30. As illustrated in FIG. 6, the image forming apparatus 30 includes a controller 910, a short-range communication circuit 920, an engine controller 930, a control panel 940, and a network I/F 950.

The controller 910 includes a CPU 901 as a main processor of a computer, a system memory (MEM-P) 902, a north bridge (NB) 903, a south bridge (SB) 904, an application specific integrated circuit (ASIC) 906, a local memory (MEM-C) 907 as a storage area, an HDD controller 908, and an HD 909 as a storage area. The NB 903 and the ASIC 906 are connected by an accelerated graphics port (AGP) bus 921.

The CPU 901 is a processor that controls overall operation of the image forming apparatus 30. The NB 903 connects the CPU 901, with the system memory 902, the SB 904, and the AGP bus 921. The NB 903 includes a memory controller for controlling reading or writing of data with respect to the system memory 902, a PCI master, and an AGP target.

The system memory 902 includes a ROM 902a and a RAM 902b. The ROM 902a is a memory that stores a program and data for implementing various functions of the controller 910. The RAM 902b is used as a memory that deploys a program and data, or as a drawing memory that stores drawing data for printing. For example, the program stored in the ROM 902a is stored in any computer-readable storage medium, such as a compact disc-read only memory (CD-ROM), compact disc-recordable (CD-R), or DVD, in a file format installable or executable by a computer, for distribution.

The SB 904 is a bridge that connects the NB 903 to a PCI device or a peripheral device. The ASIC 906 is an integrated circuit (IC) for image processing having a hardware element for image processing and acts as a bridge that connects the AGP bus 921, a PCI bus 922, the HDD controller 908, and the local memory 907 to each other. The ASIC 906 includes a PCI target, an AGP master, an arbiter (ARB) as a central processor of the ASIC 906, a memory controller to control the local memory 907, a plurality of direct memory access controllers (DMACs), and a PCI unit. The DMACs is capable of converting coordinates of image data with a hardware logic. The PCI unit transfers data between a scanner 931 and a printer 932 through the PCI bus 922. In one example, the ASIC 906 is connected to a USB interface, or the IEEE 1394 interface.

The local memory 907 is used as an image buffer for copying or a code buffer. The HD 909 is a storage that stores image data, font data for printing, and form data. The HDD controller 908 controls reading or writing of data with respect to the HD 909 under the control of the CPU 901. The AGP bus 921 is a bus interface for a graphics accelerator card, which has been proposed to accelerate graphics processing. Through directly accessing the system memory 902 by high-throughput, speed of the graphics accelerator card is improved.

The short-range communication circuit 920 includes a short-range communication antenna 920a. The short-range communication circuit 920 is a communication circuit that communicates in compliance with the near field communication (NFC) or the Bluetooth^{®}, for example.

The engine controller 930 includes the scanner 931 and the printer 932. The control panel 940 includes a panel display 940a and hardware keys 940b. The panel display 940a is, e.g., a touch panel that displays current settings or a selection screen and that receives a user input. The hardware keys 940b include, e.g., a numeric keypad and a start key. The numeric keypad receives assigned values of image forming parameters such as an image density parameter. The start key receives an instruction to start copying. The controller 910 controls overall operation of the image forming apparatus 30 and controls, for example, drawing, communication, and input from the control panel 940. The scanner 931 or the printer 932 includes an image processing unit for, for example, error diffusion and gamma conversion.

In response to an instruction to select a specific application through the control panel 940 by use of, e.g., an application (or mode) switch key, the image forming apparatus 30 selectively performs a document server function, a copier function, a printer function, and a facsimile function. In response to selection of the document server function, the image forming apparatus 30 operates in a document server mode to store document data. In response to selection of the copier function, the image forming apparatus 30 operates in a copier mode. In response to selection of the printer function, the image forming apparatus 30 operates in a printer mode. In response to selection of the facsimile function, the image forming apparatus 30 operates in a facsimile mode.

The network I/F 950 is an interface for performing data communication using the network N. The short-range communication circuit 920 and the network I/F 950 are electrically connected to the ASIC 906 via the PCI bus 922.

### Functions of Information Processing Apparatus and Image Forming Apparatus:

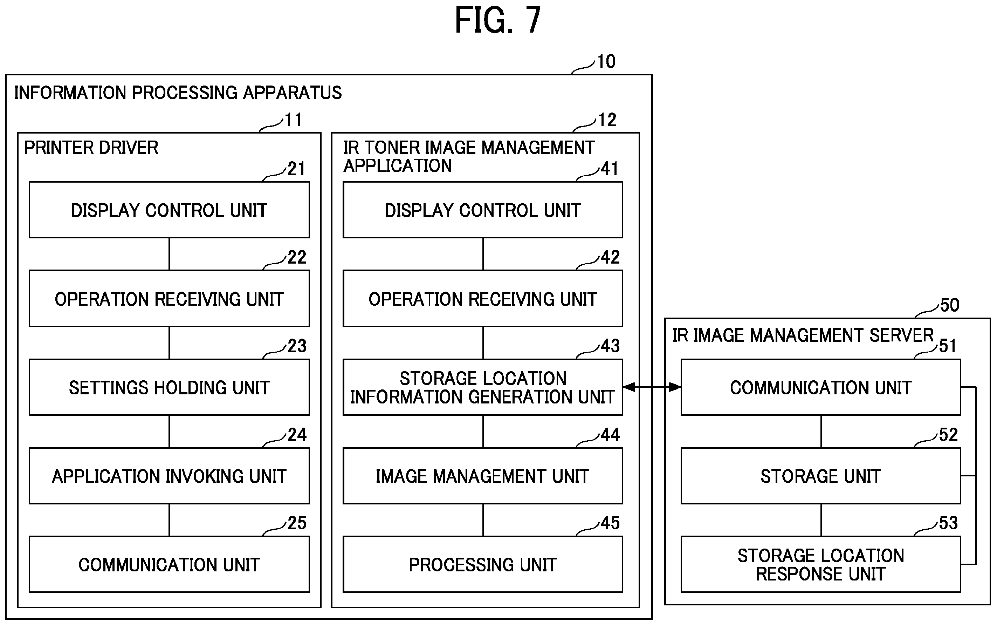

Referring to FIG. 7 to FIG. 10, functions of the information processing apparatus 10 and the image forming apparatuses 30 are described.

### Functions of Information Processing Apparatus:

FIG. 7 is a block diagram illustrating an example of a functional configuration of the information processing apparatus 10. In the information processing apparatus 10, two programs, namely, the printer driver 11 and the IR toner image management application 12 operate. The general-purpose application software for invoking the printer driver 11 is omitted in FIG. 7 in order to simplify the drawing.

This general-purpose application software may be any software that is capable of invoke the printer driver 11. Examples of the general-purpose application include word processing software, presentation software, spreadsheet software, portable document format (PDF) software, and browser software. Each of such application software saves and reads a file in the corresponding format. FIG. 7 illustrates an example in which the functional units of the information processing apparatus 10 are divided into two programs. In another example, the printer driver 11 has a function of the IR toner image management application 12.

When printing a document, the user invokes the printer driver 11 from application software, and the printer driver 11 automatically activates the IR toner image management application 12. In the IR toner image management application 12, the user can designate an IR toner image for each page (is some cases, the IR toner image is not designated depending on the page). The user can also designate the position of the print image in the IR toner image. With this configuration, the user only has to operate the IR toner image management application 12 in addition to the conventional work for printing a document on the application software. Thus, the operability does not easily degrade.

### Functions of Printer Driver:

The printer driver 11 includes a display control unit 21, an operation receiving unit 22, a settings holding unit 23, an application invoking unit 24, and a communication unit 25. These units of the printer driver 11 are functions or means implemented by or caused to function by operating one or more hardware components illustrated in FIG. 5 in cooperation with instructions of the CPU 501 according to the printer driver 11 loaded from the HD 504 to the RAM 503.

The display control unit 21 displays a print setting screen (a user interface: UI) on which the printer driver 11 accepts print settings. The operation receiving unit 22 receives print settings and settings from the user as to whether to perform printing using the IR toner. The print settings include setting of color or monochrome, number of copies, double-sided copy, and combining pages. The settings holding unit 23 stores the setting of whether to perform printing with the IR toner, which the operation receiving unit 22 receives from the user.

The application invoking unit 24 invokes the IR toner image management application 12 based on the settings stored by the settings holding unit 23, and transfers print data to the IR toner image management application 12. Further, the application invoking unit 24 receives the print data processed by the IR toner image management application 12.

The communication unit 25 is communicable with the image forming apparatus 30, and transmits print data to the image forming apparatus 30. The communication unit 25 is an example of a first communication unit.

### Functions of IR Toner Image Management Application:

The IR toner image management application 12 includes a display control unit 41, an operation receiving unit 42, a storage location information generation unit 43, an image management unit 44, and a processing unit 45. These units of the IR toner image management application 12 are functions or means implemented by or caused to function by operating one or more hardware components illustrated in FIG. 5 in cooperation with instructions of the CPU 501 according to the IR toner image management application 12 loaded from the HD 504 to the RAM 503.

The display control unit 41 displays a screen of the IR toner image management application 12. This screen allows the user to designate the combination of each page of the print image and the IR toner image and designate the print position of the IR toner image. The operation receiving unit 42 receives the designation of the combination of each page of the print image and the IR toner image and the designation of the print position of the IR toner image.

The storage location information generation unit 43 transmits, for each page, the IR toner image and the print position to the IR image management server 50, and receives a URL indicating a storage location of IR toner image and the print position for each page.

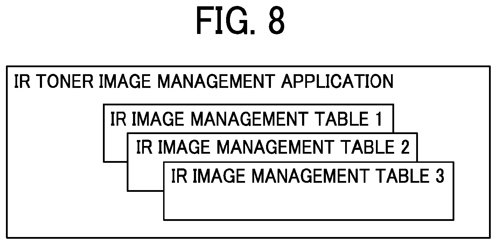

The image management unit 44 manages the IR toner image to be associated with the print image. In one example, the user registers the IR toner image in advance. In another example, the user registers the IR toner image at the time of printing using the IR toner. Details of the IR toner image managed by the image management unit 44 are described below with reference to FIG. 8.

The processing unit 45 draws the URL on each page of the print image. A printing command corresponding to the URL is added to a page on which the IR toner image is to be printed. The printing command indicates that the URL relates to printing with IR toner. A position where the URL is to be drawn is set in advance. It is preferable that the URL is printed with spot color toner (black in the present embodiment).

FIG. 8 is a diagram illustrating image management tables that the IR toner image management application 12 includes. As illustrated in FIG. 8, the IR toner image management application 12 has one IR image management table n (n is an integer equal to or greater than 1) for each IR toner image. The IR image management table n is a table for managing the IR toner image. The user is allowed to register a new IR image management table and edit and delete an existing IR image management table.

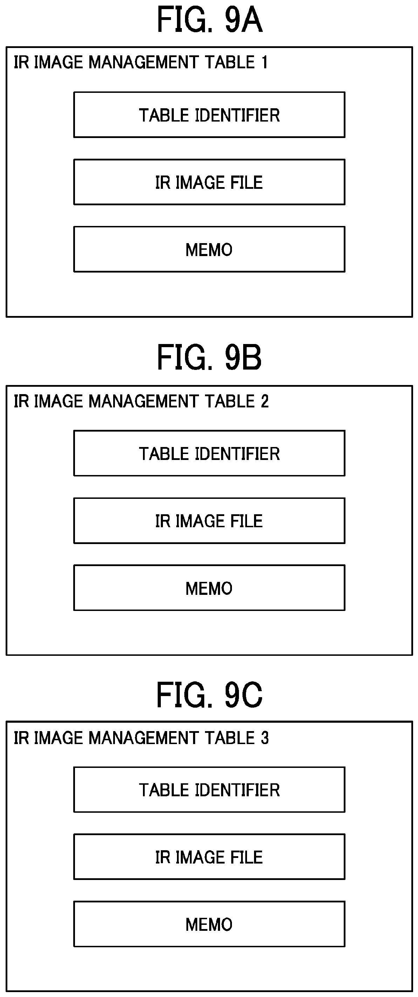

FIG. 9A to FIG. 9C are diagrams illustrating examples of the configuration of the IR image management table. FIG. 9A illustrates a configuration of the IR image management table 1. FIG. 9B illustrates a configuration of the IR image management table 2. FIG. 9C illustrates a configuration of the IR image management table 3. As illustrated in FIG. 9A to FIG. 9C, in the IR image management table n, a table identifier identifying the IR toner image, an IR image file in which the IR toner image is stored, and a memo are registered. The table identifier, the IR image file, and the memo are registered by the user.

### Functions of IR Image Management Server:

The IR image management server 50 includes a communication unit 51, a storage unit 52, and a storage location response unit 53. These functions of the IR image management server 50 are functions or means implemented by or caused to function by operating one or more hardware components illustrated in FIG. 5 in cooperation with instructions of the CPU 501 according to the program loaded from the HD 504 to the RAM 503.

The communication unit 51 communicates with the IR toner image management application 12 operating on the information processing apparatus 10 and receives the IR toner image and the print position. The storage unit 52 stores the IR toner image and the print position. In one example, the storage location is the IR image management server 50. In another example, the storage location is another server device than the IR image management server 50. The storage location response unit 53 creates the URL indicating the storage location.

### Functions of Image Forming Apparatus:

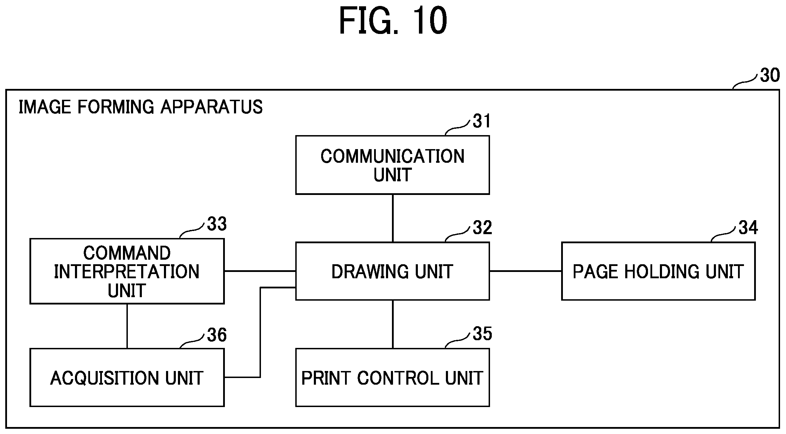

FIG. 10 is a block diagram illustrating a functional configuration of the image forming apparatus 30. The image forming apparatus 30 includes a communication unit 31, a drawing unit 32, a command interpretation unit 33, a page holding unit 34, a print control unit 35, and an acquisition unit 36. These functions of the image forming apparatus 30 are functions or means implemented by or caused to function by operating one or more hardware components illustrated in FIG. 6 in cooperation with instructions of the CPU 901 according to the program loaded from the HD 909 to the RAM 902b.

The communication unit 31 receives print data from the printer driver 11. The communication unit 31 is an example of a second communication unit. The drawing unit 32 interprets the print data received by the communication unit 31, to generate image data (bitmap data) for each page. The drawing unit 32 passes the image data to the print control unit 35. In interpreting the print data, when the print data includes a printing command, the drawing unit 32 passes the printing command to the command interpretation unit 33. The printing command is described in Printer Control Language (PCL) and designates, for example, where to form characters and images. This printing command further includes an instruction for printing with the IR toner. Further, there is a case where a URL is drawn at a predetermined position in the print image, and the printing command relating to the URL includes a setting that the URL relates to printing with the IR toner.

In a case that the print data is a page to be printed using the IR toner, the command interpretation unit 33 extracts the URL which is located at a predetermined position of the print image and in which information indicating the URL relates to printing using the IR toner is set about IR toner printing is set, and passes the URL to the acquisition unit 36. The acquisition unit 36 acquires the IR toner image and the print position from the storage destination designated by the URL, and passes the acquired IR toner image and print position to the drawing unit 32.

The drawing unit 32 creates image data in which image data of the IR toner image is overprinted on the print image at a position designated by the print position, and passes the created image data to the print control unit 35. The print control unit 35 receives image data for each page and forms an image on a sheet according to the received image data by using the printer 932.

### Processes or Operation by Printer Driver:

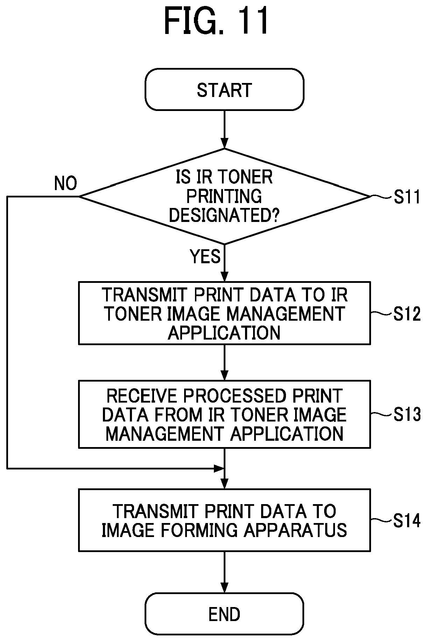

FIG. 11 is a flowchart illustrating an example of processes or operation performed by the printer driver 11. The operation illustrated in FIG. 11 starts in response to reception of print data by the printer driver 11 from a general-purpose application.

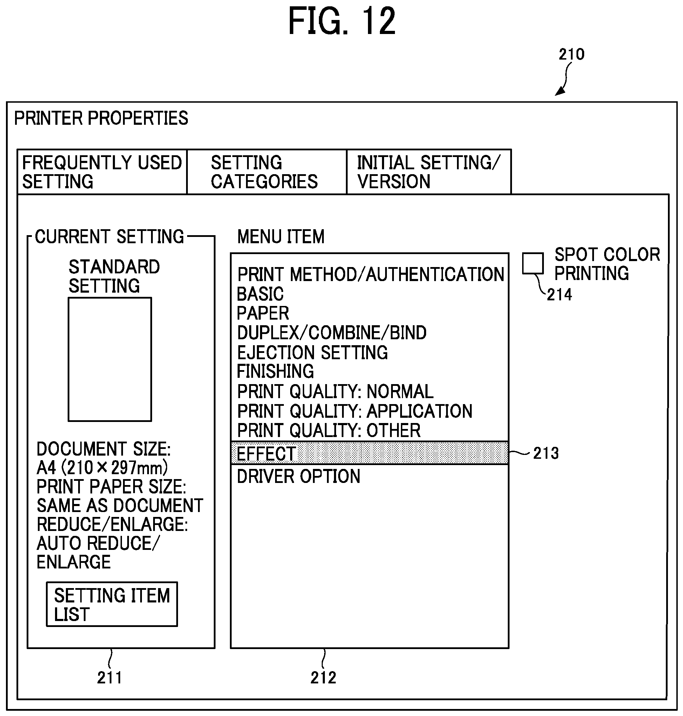

A user inputs a setting for printing using the IR toner on the print setting screen, which is described below with reference to FIG. 12. Since the settings holding unit 23 holds the setting for printing using the IR toner, the application invoking unit 24 refers to the settings holding unit 23 to determine whether printing using the IR toner is designated (S11). When the determination result of step S11 is No, the operation proceeds to step S14. In other words, the printer driver 11 converts a print image into print data and transmits the print data as is to the image forming apparatus 30 in the same or in substantially the same manner as printing using ordinary toner.

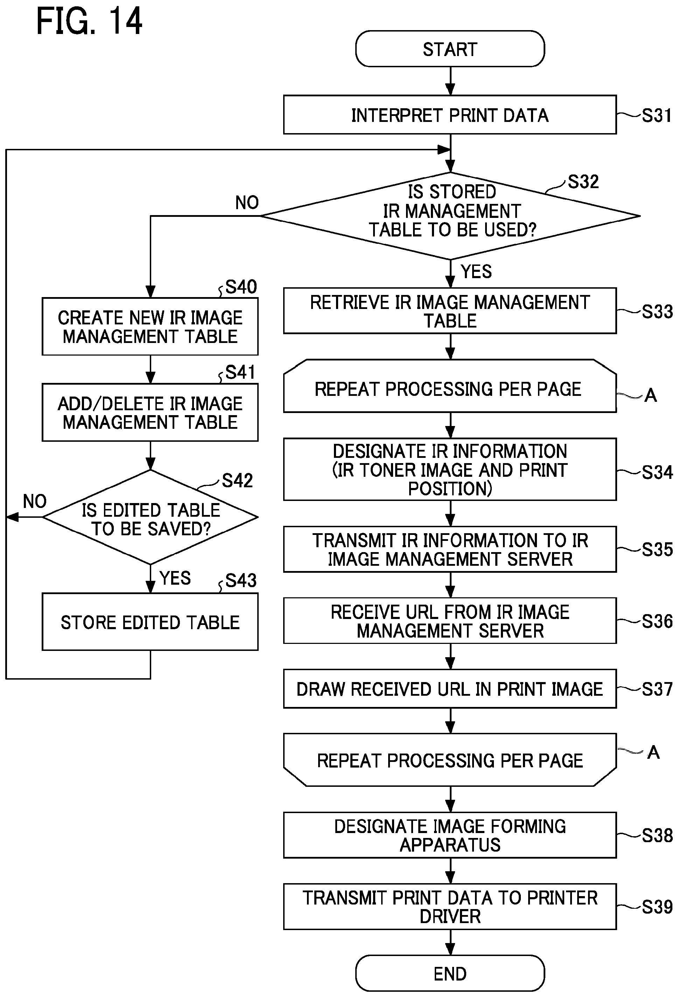

When the determination result of step S11 is Yes, the application invoking unit 24 passes the print data of the print image to the IR toner image management application 12 (S12). The IR toner image management application 12 executes processes of FIG. 14 described below.

The application invoking unit 24 receives, for each page of the print image print data to which the URL indicating the storage location of the IR toner image and the print position, from the IR toner image management application 12 (S13).

The communication unit 25 transmits the print data to the image forming apparatus 30 in page order (S14).

### Example of Print Setting Screen:

FIG. 12 illustrates an example of a print setting screen 210. The print setting screen 210 includes a current setting field 211, a menu field 212, and a spot color print setting check box 214. The current print settings and a preview are displayed in the current setting field 211. In the menu field 212, print setting items are displayed so as to be selectable. Th print setting items includes an effect item 213. In response to pressing by a user of the effect item 213, the spot color print setting check box 214 is displayed. A user who wants to perform printing with the IR toner puts a mark in the spot color print setting check box 214. The operation receiving unit 22 of the printer driver 11 receives the designation by the user as to whether to perform printing with the IR toner.

### Setting of IR Toner Image Management Application (IR Image Management Table) by User:

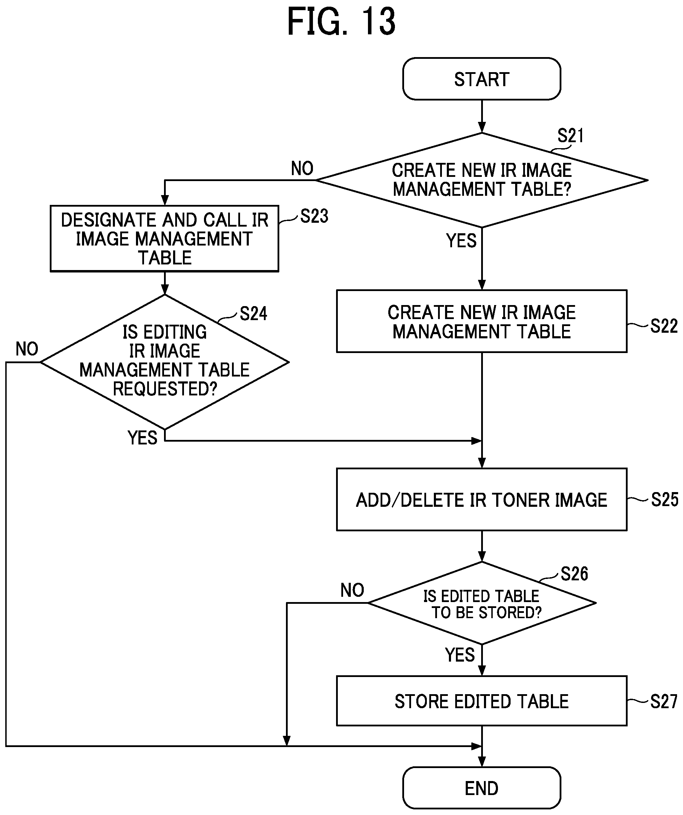

Referring to FIG. 13, a description is given of generation of the IR image management table, for which the user directly activates the IR toner image management application 12 on the information processing apparatus 10. FIG. 13 is a flowchart illustrating an example of processes or operation performed by the IR toner image management application 12 of receiving user settings for generating the IR image management table. The user can directly start the IR toner image management application 12 and control the IR toner image.

The operation receiving unit 42 of the IR toner image management application 12 determines whether the user operation is for creating a new IR image management table (S21). Creating an IR image management table means registering an IR toner image.

When the determination result of step S21 is Yes, the image management unit 44 creates a new IR image management table (S22).

When the determination result of step S21 is No, the image management unit 44 passes the list of existing IR image management tables to the display control unit 41 according to the user's operation (S23). The display control unit 41 displays the list of the IR image management table, and the operation receiving unit 42 determines whether the user's operation is for editing (changing) the IR image management table (S24). When the user's operation is not for changing the IR image management table (No in step S24), the operation of FIG. 13 ends.

When the new IR image management table is created (S22) or the IR image management table is changed (Yes in step S24) according to the user operation, the image management unit 44 adds or deletes the IR toner image or the memo (S25).

When the user's operation is for saving the IR image management table to which the IR toner image is added or deleted (Yes in S26), the image management unit 44 stores the corresponding IR image management table (S27).

Thus, the user can register the IR toner image in the IR toner image management application 12 in advance. Further, as described below with reference to FIG. 14, the user can also register the IR toner image in the IR toner image management application 12 at the time of printing.

### Processes or Operation by IR Toner Image Management Application Invoked by Printer Driver:

FIG. 14 is a flowchart illustrating an example of processes or operation performed by the IR toner image management application 12 when the printer driver 11 invokes the IR toner image management application 12.

The IR toner image management application 12 receives the print data of the print image. The processing unit 45 receives the print data of the print image and interprets the page breaks and the number of pages (S31).

When the user uses the stored IR image management table (Yes in S32), the image management unit 44 retrieves the list of the IR image management tables according to the operation by the user (S33).

As described below, the processing unit 45 repeats processes for each page of the print image (loop A).

The operation receiving unit 42 receives designation of an IR toner image to be overprinted on the print image and a print position (S34).

The storage location information generation unit 43 transmits the IR toner image and the print position to the IR image management server 50 (S35). The storage location information generation unit 43 receives, from the IR image management server 50, a URL indicating a storage location of the IR toner image and the print position (S36).

The processing unit 45 adds, to a page of the print data, a printing command instructing that the page is to be printed with the IR toner, and draws a URL indicating the storage location at a predetermined position of the print image (S37). The predetermined position is preferably an inconspicuous place such as the upper right, lower right, lower left, or upper left of the print image. Further, the processing unit 45 sets a printing command indicating that the URL relates to IR toner printing. The reason why the printing command is set is that a URL unrelated to the storage location information is sometimes included in the print image. Black color (IR toner) is designated for the IR toner image and the URL.

The IR toner image management application 12 designates the image forming apparatus 30 for printing the print data after completion of the processing (S38). The designated image forming apparatus 30 is, for example, the image forming apparatus 30 that is set by the user with the printer driver 11.

After completion of the processing, the IR toner image management application 12 sends the processed print data to the printer driver 11 (S39).

By contrast, when the user does not use the stored IR image management table (No in S32), the image management unit 44 creates a new IR image management table (S40).

According to addition or deletion of the IR image management table performed by the user, the image management unit 44 adds or deletes the IR image management table (S41).

In response to the user's operation of saving the IR image management table that is added (Yes in S42), the image management unit 44 stores the corresponding IR image management table (S43).

In a case that the IR toner image does not change even when the print image changes, it is preferable that the IR toner image management application 12 has the association between the page number of the print image and the IR toner image. The IR toner image management application 12 can insert the IR toner image based on such association, thus dispensing the user from performing an operation of selecting an IR toner image.

### Processes or Operation by IR Image Management Server:

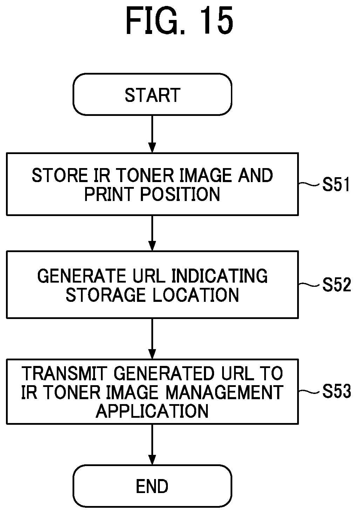

FIG. 15 is a flowchart illustrating an example of processes or operation performed by the IR image management server 50 of transmitting a URL to the IR toner image management application 12 in response to receiving the IR toner image and the print position.

The communication unit 51 of the IR image management server 50 receives an IR toner image and a print position from the information processing apparatus 10, and the storage unit 52 stores the IR toner image and the print position in a desired storage location (S51).

Next, the storage location response unit 53 creates a URL indicating a storage location where the IR toner image and the print position is stored (S52).

The communication unit 51 transmits the created URL to the information processing apparatus 10 (S53).

Although the description given referring to FIG. 14 and FIG. 15 is of an example in which the IR image management server 50 stores the URL and transmits the storage location information as a response to the information processing apparatus 10. In another example, the information processing apparatus 10 stores the IR toner image and the print position and generates the URL. In this case, the storage location information generation unit 43 stores the IR toner image and the print position in an external server and creates the URL indicating the storage location.

### Processes or Operation Performed by Image Forming Apparatus:

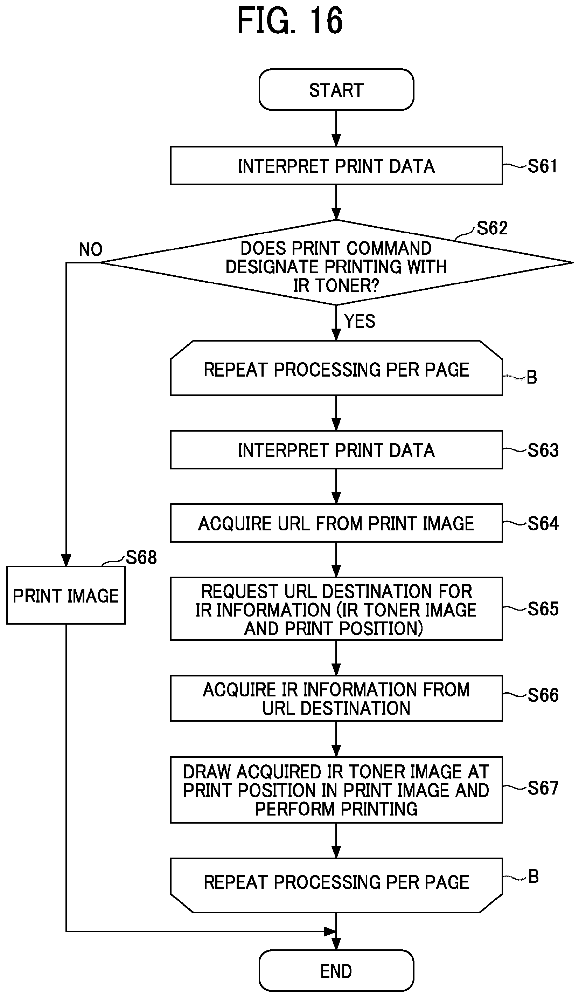

Referring to FIG. 16, a description is given of an operation performed by the image forming apparatus 30 of performing IR toner printing. FIG. 16 is a flowchart illustrating an example of processes or operation performed by the image forming apparatus 30 of performing printing according to print data. The operation of FIG. 16 starts in response to reception of print data by the communication unit 31 of the image forming apparatus 30.

First, the drawing unit 32 interprets, with the command interpretation unit 33, a printing command of the print data, page by page, to the last page (S61).

The drawing unit 32 determines whether the print data includes, at least, one page including the printing command instructing printing (overprinting) with the IR toner (S62).

When none of the pages includes the printing command instructing printing with the IR toner (No in S62), the drawing unit 32 generates image data (bitmap data) and sends the image data to the print control unit 35. The print control unit 35 controls the printer 932 to print the generated image data (S68).

When a printing command instructing printing with the IR toner is included in even one page (Yes in S62), loop B is executed for each page.

The command interpretation unit 33 interprets the printing command of the current page (S63). The command interpretation unit 33 determines whether the printing command of the current page includes the printing command instructing printing with the IR toner.

When the determination results indicates that the printing command of the current page includes the printing command instructing printing with the IR toner, the command interpretation unit 33 acquires the URL from the predetermined position of the print image (S64). The URL is identified by the presence of a character string such as "http://". The command interpretation unit 33 determines whether the printing command includes a setting indicating that the URL relates to the IR toner image.

In a case that the URL including the setting indicating that the URL relates to the IR toner image is detected, the acquisition unit 36 requests the URL as a communication destination for the IR toner print image and the print position (S65), to acquire the IR toner image and the print position from the URL (S66).

Next, the drawing unit 32 superimposes the IR toner image at a position designated by the print position of the print image, to generate image data. The print control unit 35 controls the printer 932 to perform printing according to the generated image data (S67).

When the processing of loop B is completed to the last page, the operation of FIG. 16 ends.

### Supplementary Description of IR Toner Printing by Image Forming Apparatus:

FIG. 17 is a diagram for describing an operation of printing with the IR toner performed by the image forming apparatus 30. The image forming apparatus 30 according to the present embodiment is a general-purpose image forming apparatus without a capability of an IR toner (spot color) designation (only cyan, magenta, yellow, and black can be designated). The image forming apparatus 30 according to the present embodiment is a color printer that performs printing with a combination of four colors of cyan, magenta, yellow, and black (C, M, Y, and K). The image forming apparatus 30 converts RGB print data output by the printer driver 11 into cyan print data, magenta print data, and yellow print data, respectively. In other words, the image forming apparatus 30 does not convert the RGB print data to black print data. Black can be expressed by cyan, magenta, and yellow of cyan, magenta, yellow, and black. A general-purpose image forming apparatus uses black to improve the color development property and reduce the amount of toner consumption. In the image forming apparatus 30 according to the present embodiment, the IR toner is assigned to black, since black can be printed without black toner. The IR toner is contained in the black toner cartridge instead.
(1) The image forming apparatus 30 generates a plain image 81 for each of cyan, magenta, and yellow based on the print image out of the print data transmitted from the information processing apparatus 10. In the plain image 81, the presence or absence of coloring is indicated by a bit, and the plain image 81 is image data in which each pixel is represented by 1 or 0.
(2) The image forming apparatus 30 converts the IR toner image and the URL in the print data transmitted from the information processing apparatus 10 into a black plain image 82. This is because black is assigned to the IR toner in the image forming apparatus 30, and the color may be converted into a vacant color (color is not assigned) in the image forming apparatus 30.
(3) The image forming apparatus 30 forms the plain image 81 of cyan with cyan toner, the plain image 81 of magenta with magenta toner, and the plain image 81 of yellow with yellow toner. The image forming apparatus 30 further forms the black plain image 82 with the IR toner in an overprinting manner. Thus, an output is obtained in which the IR toner image 101 and the URL 111 is printed with the IR toner.

As described above, the printing system 100 according to the present embodiment performs IR toner printing without an image forming apparatus capable of designating the IR toner, application software capable of designating the IR toner, or both.

### Overprint:

In the present embodiment, overprinting is designated at the time of printing. Overprinting is printing one color superimposed on another color.

FIG. 18A to FIG. 18C illustrate an example of overprint. FIG. 18A illustrates an output 171 output by the image forming apparatus 30. The output 171 is printed in two colors, cyan for the background and black for text (Black). In other words, in the printing process, the plain image 81 of cyan and the black plain image 82 are generated. When overprint is not designated, as illustrated in FIG. 18B, the image forming apparatus 30 masks the black portion (in the outlined manner) to generate the plain image 81 of cyan. When the overprint is designated, as illustrated in FIG. 18C, the image forming apparatus 30 generates the plain image 81 of cyan without masking the black portion (without outlining).

When the overprint is not designated, the gap between the lower color (cyan in FIG. 18A to FIG. 18C) and the upper color (black in FIG. 18A to FIG. 18C) is sometimes noticeable. When the overprint is designated, there is a case that the two colors are undesirably mixed, and the color displayed by the application software is not reproduced in the output 171. The spot color in this embodiment is transparent. Even though the presence or absence of overprint is set according to the document, the lower color (photograph, etc.) is outlined when overprint is not designated. On the other hand, since the spot color is transparent, the color is unlikely to change even when overprint is designated. Accordingly, in the present embodiment, with the overprint designation, the black plain image 82 assigned with the spot color is printed. Cyan, magenta, and yellow can be without the designation of overprint.

As described above, the printing system 100 according to the present embodiment can perform printing using the IR toner with application software that handles general RGB image data. Further, users can use the entire page to design a print image.

### Variation:

The above-described embodiments are illustrative and do not limit the present invention. Thus, numerous additional modifications and variations are possible in light of the above teachings. For example, elements and/or features of different illustrative embodiments may be combined with each other and/or substituted for each other within the scope of the present invention. Any one of the above-described operations may be performed in various other ways, for example, in an order different from the one described above.

For example, in the present embodiment, a toner transparent to visible light is used. Alternatively, the image forming apparatus 30 performs printing using colors, such as gold, silver, and white, other than cyan, magenta, yellow, and black.

Further, the present embodiment mainly concerns electrophotographic printing. In another example, aspects of the present disclosure are suitably applicable to an inkjet printer that discharges liquid droplets.

The functional configurations of the information processing apparatus 10 and the image forming apparatus 30 are divided into the functional blocks as illustrated in FIG. 7, for example, based on main functions of the display apparatus, in order to facilitate understanding the processes performed by the display apparatus. The scope of the present disclosure is not limited by how the process units are divided or by the names of the process units. In another example, the processes implemented by the information processing apparatus 10 and the image forming apparatus 30 are divided to a larger number of processes depending on the contents of processes. In still another example, one process is divided to include the larger number of processes.

The apparatuses or devices described in one or more embodiments are just one example of plural computing environments that implement the one or more embodiments disclosed herein. In some embodiments, the IR image management server 50 includes multiple computing devices, such as a server cluster. The multiple computing devices communicate with one another through any type of communication link including, for example, a network or a shared memory, and perform the operations described in the present disclosure.

Further, the IR image management server 50 can be configured to share the disclosed processes, for example, the processes illustrated in FIG. 15 with any server in various combinations. For example, a process performed by a given unit is performed by a plurality of information processing apparatuses included in the IR image management server 50. Further, in one example, the elements of the IR image management server 50 are combined into one apparatus or are divided into a plurality of apparatuses.

The functionality of the elements disclosed herein may be implemented using circuitry or processing circuitry which includes general purpose processors, special purpose processors, integrated circuits, application specific integrated circuits (ASICs), digital signal processors (DSPs), field programmable gate arrays (FPGAs), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

According to a first example of the present disclosure, a printing system is communicable with an image management server through a network. The printing system includes an information processing apparatus and an image forming apparatus. The information processing apparatus includes a display control unit for controlling a display to display a print setting screen for receiving a print setting that designates printing of a specific color image superimposed on an image to be printed, the specific color image being an image of a specific color. The information processing apparatus includes a storage location information generation unit for, in response to receiving the print setting via the print setting screen, transmitting the specific color image corresponding to the print setting to the image management server through the network and acquiring storage location information indicating a storage location where the specific color image is stored from the image management server. The information processing apparatus includes a first communication unit for transmitting print data to the image forming apparatus, the print data including a printing command including the print setting indicating that the specific color image is to be superimposed and printed on the image to be printed, the image to be printed, and the acquired storage location information. The image forming apparatus includes a printer. The image forming apparatus includes a second communication unit for receiving the print data. The image forming apparatus includes an acquisition unit for acquiring the specific color image from the image management server based on the storage location information included in the print data received by the second communication unit. The image forming apparatus includes a drawing unit for generating, based on the printing command included in the print data, image data for overprinting the specific color image acquired from the image management server on the image to be printed included in the print data. The image forming apparatus includes a print control unit for controlling the printer to perform printing based on the generated image data.

According to a second example of the present disclosure, in the printing system of the above first example, the information processing apparatus further includes a processing unit for including the storage location information in the image to be printed. The first communication unit transmits the print data including the image to be printed including the storage location information and the printing command to the image forming apparatus.

According to a third example of the present disclosure, in the printing system of the above second example, the processing unit draws the storage location information on the image to be printed, and further causes the printing command to include a setting indicating that the specific color image is to be printed in the specific color. The image forming apparatus further includes an interpretation unit for detecting the storage location information from the image to be printed and detecting that the specific color image is to be printed in the specific color from the printing command. In a case that the interpretation unit detects the storage location information from the image to be printed and detects that the specific color image is to be printed in the specific color from the printing command, the acquisition unit acquires the specific color image from the image management server based on the storage location information.

According to a fourth example of the present disclosure, in the printing system of the above third example, the print control unit controls the printer to overprint the specific color image on the image to be printed and to overprint the storage location information in the specific color on the image to be printed.

According to a fifth example of the present disclosure, in the printing system of any one of the above first to fourth examples, the printing system further includes an operation receiving unit for receiving a setting of a position of the specific color image in the image to be printed via the print setting screen. The storage location information generation unit transmits the specific color image corresponding to the print setting and position information relating to the position of the specific color image to the image management server through the network, and acquires the storage location information including the specific color image and the position information from the image management server. The print control unit overprints the specific color image acquired from the image management server by the acquisition unit at the position indicated by the position information in the image to be printed.

According to a sixth example of the present disclosure, in the printing system of any one of the above first to fifth examples, the storage location information is a URL.

According to a seventh example of the present disclosure, in the printing system of any one of the above first to sixth examples, the specific color is a color transparent to visible light.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A printing system (100) communicable with an image management server (50) through a network, the printing system comprising:
an information processing apparatus (10); and
an image forming apparatus (30A, 30B),
the information processing apparatus (10) including:
a display control unit (21) for controlling a display (204) to display a print setting screen for receiving, for each page of a print image, a print setting that designates printing of a specific color image superimposed on an image to be printed, the specific color image being an image of a specific color;
a storage location information generation unit (43) for, in response to receiving the print setting via the print setting screen, transmitting the specific color image corresponding to the print setting to the image management server (50) through the network and acquiring storage location information indicating a storage location where the specific color image is stored from the image management server (50);
a processing unit (45) for including the storage location information in the image to be printed; wherein the processing unit (45) draws the storage location information on the image to be printed, and further causes the printing command to include a setting indicating that the specific color image is to be printed in the specific color; and
a first communication unit (25) for transmitting print data to the image forming apparatus (30A, 30B), the print data including a printing command including the print setting indicating that the specific color image is to be superimposed and printed on the image to be printed, the image to be printed, and the acquired storage location information,
the image forming apparatus (30A, 30B) including:
a printer (932);
a second communication unit (31) for receiving the print data;
an acquisition unit (36) for acquiring the specific color image from the image management server (50) based on the storage location information included in the print data received by the second communication unit (31);
an interpretation unit (33) for detecting the storage location information from the image to be printed and detecting that the specific color image is to be printed in the specific color from the printing command, and
in a case that the interpretation unit (33) detects the storage location information from the image to be printed and detects that the specific color image is to be printed in the specific color from the printing command, the acquisition unit (36) acquires the specific color image from the image management server (50) based on the storage location information;
a drawing unit (32) for generating, based on the printing command included in the print data, image data for overprinting the specific color image acquired from the image management server (50) on the image to be printed included in the print data; and
a print control unit (35) for controlling the printer (932) to perform printing based on the generated image data.

2. The printing system (100) of claim 1, wherein the print control unit (35) controls the printer (932) to overprint the specific color image on the image to be printed and to overprint the storage location information in the specific color on the image to be printed.

3. The printing system (100) of any one of claims 1 or 2, further comprising an operation receiving unit (42) for receiving a setting of a position of the specific color image in the image to be printed via the print setting screen, wherein
the storage location information generation unit (43) transmits the specific color image corresponding to the print setting and position information relating to the position of the specific color image to the image management server (50) through the network, and acquires the storage location information including the specific color image and the position information from the image management server (50), and
the print control unit (35) overprints the specific color image acquired from the image management server (50) by the acquisition unit (36) at the position indicated by the position information in the image to be printed.

4. The printing system (100) of any one of claims 1 to 3, wherein the storage location information is a uniform resource locator (URL).

5. The printing system (100) of any one of claims 1 to 4, wherein the specific color is a color transparent to visible light.

6. Carrier means carrying a computer readable code for controlling an information processing apparatus (10) that transmits print data to an image forming apparatus (30A, 30B) and is communicable with an image management server (50) through a network to perform a method comprising:
controlling a display (204) to display a print setting screen for receiving, for each page of a print image, a print setting that designates printing of a specific color image superimposed on an image to be printed, the specific color image being an image of a specific color;
in response to receiving the print setting via the print setting screen, transmitting (S35) the specific color image corresponding to the print setting to the image management server (50) through the network; acquiring (S36) storage location information indicating a storage location where the specific color image is stored from the image management server (50); including (S37) the storage location information in the image to be printed; and
transmitting (S39) print data to the image forming apparatus (30A, 30B), the print data including a printing command including the print setting indicating that the specific color image is to be superimposed and printed on the image to be printed, the image to be printed, and the acquired storage location information,
detecting (S64) the storage location information from the image to be printed and detecting that the specific color image is to be printed in the specific color from the printing command, and
in a case of detecting the storage location information from the image to be printed and detecting that the specific color image is to be printed in the specific color from the printing command, acquiring (S66) the specific color image based on the storage location information.

## Patentansprüche

1. Drucksystem (100), das über ein Netzwerk mit einem Bildverwaltungsserver (50) kommunizieren kann, wobei das Drucksystem Folgendes umfasst:
eine Informationsverarbeitungseinrichtung (10); und
ein Bildgebungseinrichtung (30A, 30B),
wobei die Informationsverarbeitungseinrichtung (10) Folgendes einschließt:
eine Anzeigesteuereinheit (21) zum Steuern einer Anzeige (204), einen Druckeinstellungsbildschirm zum Empfangen, für jede Seite eines Druckbilds, einer Druckeinstellung anzuzeigen, die ein Drucken eines bestimmten Farbbilds vorschreibt, das über ein zu druckendes Bild gelegt wird, wobei das bestimmte Farbbild ein Bild einer bestimmten Farbe ist;
eine Speicherortinformationserzeugungseinheit (43) zum, infolge eines Empfangens der Druckeinstellung über den Druckeinstellungsbildschirm, Übermitteln des der Druckeinstellung entsprechenden bestimmten Farbbilds über das Netzwerk an den Bildverwaltungsserver (50) und Beziehen von Speicherortinformationen vom Bildverwaltungsserver (50), die einen Speicherort angeben, an dem das Farbbild gespeichert ist;
eine Verarbeitungseinheit (45) zum Einschließen der Speicherortinformationen in das zu druckende Bild; wobei die Verarbeitungseinheit (45) die Speicherortinformationen in das zu druckende Bild einfügt und darüber hinaus bewirkt, dass der Druckbefehl eine Einstellung einschließt, die angibt, dass das bestimmte Farbbild in der bestimmten Farbe gedruckt werden soll; und
eine erste Kommunikationseinheit (25) zum Übertragen von Druckdaten an die Bildgebungseinrichtung (30A, 30B), wobei die Druckdaten einen Druckbefehl einschließlich der Druckeinstellung einschließen, die angibt, dass das bestimmte Farbbild über das zu druckende Bild gelegt und gedruckt werden soll, des zu druckenden Bilds und der bezogenen Speicherortinformationen,
wobei die Bildgebungseinrichtung (30A, 30B) Folgendes einschließt:
einen Drucker (932);
eine zweite Kommunikationseinheit (31) zum Empfangen der Druckdaten;
eine Bezugseinheit (36) zum Beziehen des bestimmten Farbbilds vom Bildverwaltungsserver (50) basierend auf der in den von der zweiten Kommunikationseinheit (31) empfangenen Druckdaten eingeschlossenen Speicherortinformationen;
eine Interpretationseinheit (33) zum Detektieren der Speicherortinformationen aus dem zu druckenden Bild und zum Detektieren, dass das bestimmte Farbbild in der bestimmten Farbe gemäß dem Druckbefehl gedruckt werden soll, und
falls die Interpretationseinheit (33) die Speicherortinformationen des zu druckenden Bilds detektiert und detektiert, dass das bestimmte Farbbild in der bestimmten Farbe des Druckbefehls gedruckt werden soll, bezieht die Bezugseinheit (36) das bestimmte Farbbild vom Bildverwaltungsserver (50) basierend auf den Speicherortinformationen;
eine Zeicheneinheit (32) zum Erzeugen, basierend auf dem in den Druckdaten eingeschlossenen Druckbefehl, von Bilddaten zum Überdrucken bestimmten Farbbilds, das von dem Bildverwaltungsserver (50) bezogen wurde, auf das zu druckende Bild, das in den Druckdaten eingeschlossen ist; und
eine Drucksteuereinheit (35) zum Steuern des Druckers (932), Drucken basierend auf den erzeugten Bilddaten durchzuführen.

2. Drucksystem (100) nach Anspruch 1, wobei die Drucksteuereinheit (35) den Drucker (932) steuert, das bestimmte Farbbild auf das zu druckende Bild zu überdrucken und die Speicherortinformationen in der bestimmten Farbe auf das zu druckende Bild zu überdrucken.

3. Drucksystem (100) nach einem der Ansprüche 1 oder 2, weiter umfassend eine Operationsempfangseinheit (42) zum Empfangen einer Einstellung der Position des bestimmten Farbbilds im zu druckenden Bild über den Druckeinstellungsbildschirm, wobei
die Speicherortinformationserzeugungseinheit (43) das bestimmte Farbbild entsprechend den Druckeinstellungs- und Positionsinformationen bezüglich der Position des bestimmten Farbbilds über das Netzwerk an den Bildverwaltungsserver (50) überträgt, und die Speicherortinformationen einschließlich des bestimmten Farbbilds und die Positionsinformationen von dem Bildverwaltungsserver (50) bezieht, und
die Drucksteuereinheit (35) das von der Erfassungseinheit (36) vom Bildverwaltungsserver (50) bezogene bestimmte Farbbild an der durch die Positionsinformationen im zu druckenden Bild angegebenen Position überdruckt.

4. Drucksystem (100) nach einem der Ansprüch 1 bis 3, wobei die Speicherortinformationen ein Uniform Resource Locator (URL) sind.

5. Drucksystem (100) nach einem der Ansprüche 1 bis 4, wobei die bestimmte Farbe eine für sichtbares Licht durchlässige Farbe ist.

6. Trägermittel, tragend einen computerlesbaren Code zum Steuern einer Informationsverarbeitungseinrichtung (10), das Druckdaten an eine Bildgebungseinrichtung (30A, 30B) überträgt und über ein Netzwerk mit einem Bildverwaltungsserver (50) kommunizieren kann, um ein Verfahren durchzuführen, das Folgendes umfasst:
Steuern einer Anzeige (204), einen Druckeinstellungsbildschirm zum Empfangen, für jede Seite eines Druckbilds, einer Druckeinstellung anzuzeigen, die ein Drucken eines bestimmten Farbbilds vorschreibt, das über ein zu druckendes Bild gelegt wird, wobei das bestimmte Farbbild ein Bild einer bestimmten Farbe ist;
infolge eines Empfangens der Druckeinstellung über den Druckeinstellungsbildschirm, Übermitteln (S35) des der Druckeinstellung entsprechenden bestimmten Farbbilds über das Netzwerk an den Bildverwaltungsserver (50); Beziehen (S36) von Speicherortinformationen vom Bildverwaltungsserver (50), die einen Speicherort angeben, an dem das Farbbild gespeichert ist; Einschließen (S37) der Speicherortinformationen in dem zu druckenden Bild; und
Übertragen (S39) von Druckdaten an die Bildgebungseinrichtung (30A, 30B), wobei die Druckdaten einen Druckbefehl einschließlich der Druckeinstellung einschließen, die angibt, dass das bestimmte Farbbild über das zu druckende Bild gelegt und gedruckt werden soll, des zu druckenden Bilds und der bezogenen Speicherortinformationen,
Detektieren (S64) der Speicherortinformationen aus dem zu druckenden Bild und Detektieren, dass das bestimmte Farbbild in der bestimmten Farbe gemäß dem Druckbefehl gedruckt werden soll, und
in einem Fall vom Detektieren der Speicherortinformationen aus dem zu druckenden Bild und Detektieren, dass das bestimmte Farbbild in der bestimmten Farbe gemäß dem Druckbefehl gedruckt werden soll, Beziehen (S66) des bestimmten Farbbilds basierend auf den Speicherortinformationen.

## Revendications

1. Système d'impression (100) pouvant communiquer avec un serveur de gestion d'images (50) via un réseau, le système d'impression comprenant :
un appareil de traitement d'informations (10) ; et
un appareil de formation d'images (30A, 30B),
l'appareil de traitement d'informations (10) incluant :
une unité de commande d'affichage (21) destinée à commander un dispositif d'affichage (204) afin d'afficher un écran de paramètres d'impression pour recevoir, pour chaque page d'une image à imprimer, un paramètre d'impression qui désigne l'impression d'une image couleur spécifique superposée à une image à imprimer, l'image couleur spécifique étant une image d'une couleur spécifique ;
une unité de génération d'informations d'emplacement de stockage (43) destinée à, en réponse à la réception du paramètre d'impression par l'intermédiaire de l'écran de paramètres d'impression, transmettre l'image couleur spécifique correspondant au paramètre d'impression au serveur de gestion d'images (50) via le réseau et acquérir des informations d'emplacement de stockage indiquant un emplacement de stockage où l'image couleur spécifique est stockée auprès du serveur de gestion d'images (50) ;
une unité de traitement (45) destinée à inclure les informations d'emplacement de stockage dans l'image à imprimer ; dans lequel, l'unité de traitement (45) dessine les informations d'emplacement de stockage sur l'image à imprimer, et amène en outre la commande d'impression à inclure un paramètre indiquant que l'image couleur spécifique est à imprimer dans la couleur spécifique ; et
une première unité de communication (25) destinée à transmettre des données d'impression à l'appareil de formation d'images (30A, 30B), les données d'impression incluant une commande d'impression incluant le paramètre d'impression indiquant que l'image couleur spécifique est à superposer et à imprimer sur l'image à imprimer, l'image à imprimer et les informations d'emplacement de stockage acquises,
l'appareil de formation d'images (30A, 30B) incluant :
une imprimante (932) ;
une seconde unité de communication (31) destinée à recevoir les données d'impression ;
une unité d'acquisition (36) destinée à acquérir l'image couleur spécifique auprès du serveur de gestion d'images (50) sur la base des informations d'emplacement de stockage incluses dans les données d'impression reçues par la seconde unité de communication (31) ;
une unité d'interprétation (33) destinée à détecter les informations d'emplacement de stockage de l'image à imprimer et détecter que l'image couleur spécifique est à imprimer dans la couleur spécifique de la commande d'impression, et
dans le cas où l'unité d'interprétation (33) détecte les informations d'emplacement de stockage de l'image à imprimer et détecte que l'image couleur spécifique est à imprimer dans la couleur spécifique conformément à la commande d'impression, l'unité d'acquisition (36) acquiert l'image couleur spécifique auprès du serveur de gestion d'images (50) sur la base des informations d'emplacement de stockage ;
une unité de dessin (32) destinée à générer, sur la base de la commande d'impression incluse dans les données d'impression, des données d'image pour surimprimer l'image couleur spécifique acquise auprès du serveur de gestion d'images (50) sur l'image à imprimer incluse dans les données d'impression ; et
une unité de commande d'impression (35) destinée à commander l'imprimante (932) afin d'effectuer l'impression sur la base des données d'image générées.

2. Système d'impression (100) selon la revendication 1, dans lequel l'unité de commande d'impression (35) commande l'imprimante (932) afin de surimprimer l'image couleur spécifique sur l'image à imprimer et de surimprimer les informations d'emplacement de stockage dans la couleur spécifique sur l'image à imprimer.

3. Système d'impression (100) selon l'une quelconque des revendications 1 ou 2, comprenant en outre une unité de réception d'opérations (42) destinée à recevoir un paramètre d'une position de l'image couleur spécifique dans l'image à imprimer par l'intermédiaire de l'écran de paramètres d'impression, dans lequel
l'unité de génération d'informations d'emplacement de stockage (43) transmet l'image couleur spécifique correspondant aux paramètres d'impression et les informations de position relatives à la position de l'image couleur spécifique au serveur de gestion d'images (50) via le réseau, et acquiert les informations d'emplacement de stockage, incluant l'image couleur spécifique et les informations de position, auprès du serveur de gestion d'images (50), et
l'unité de commande d'impression (35) surimprime l'image couleur spécifique acquise auprès du serveur de gestion d'images (50) par l'unité d'acquisition (36) à la position indiquée par les informations de position dans l'image à imprimer.

4. Système d'impression (100) selon l'une quelconque des revendications 1 à 3, dans lequel les informations d'emplacement de stockage sont un localisateur de ressources uniforme (URL).

5. Système d'impression (100) selon l'une quelconque des revendications 1 à 4, dans lequel la couleur spécifique est une couleur transparente à la lumière visible.

6. Support contenant un code lisible par ordinateur destiné à commander un appareil de traitement d'informations (10) qui transmet des données d'impression à un appareil de formation d'images (30A, 30B) et pouvant communiquer avec un serveur de gestion d'images (50) via un réseau pour exécuter un procédé comprenant :
la commande d'un dispositif d'affichage (204) pour afficher un écran de paramètres d'impression pour recevoir, pour chaque page d'une image à imprimer, un paramètre d'impression qui désigne l'impression d'une image couleur spécifique superposée à une image à imprimer, l'image couleur spécifique étant une image d'une couleur spécifique ;
en réponse à la réception du paramètre d'impression par l'intermédiaire de l'écran de paramètres d'impression, la transmission (S35) de l'image couleur spécifique correspondant au paramètre d'impression au serveur de gestion d'images (50) via le réseau ; l'acquisition (S36) d'informations d'emplacement de stockage indiquant un emplacement de stockage où l'image couleur spécifique est stockée auprès du serveur de gestion d'images (50) ; l'inclusion (S37) des informations d'emplacement de stockage dans l'image à imprimer ; et
la transmission (S39) de données d'impression à l'appareil de formation d'images (30A, 30B), les données d'impression incluant une commande d'impression incluant le paramètre d'impression indiquant que l'image couleur spécifique est à superposer et à imprimer sur l'image à imprimer, l'image à imprimer et les informations d'emplacement de stockage acquises,
la détection (S64) des informations d'emplacement de stockage de l'image à imprimer et la détection que l'image couleur spécifique est à imprimer dans la couleur spécifique conformément à **la** commande d'impression, et
dans le cas de **la** détection des informations d'emplacement de stockage de l'image à imprimer et de **la** détection que l'image couleur spécifique est à imprimer dans **la** couleur spécifique de la commande d'impression, l'acquisition (S66) de l'image couleur spécifique sur la base des informations d'emplacement de stockage.
